# EUROPEAN PATENT APPLICATION

(11) **EP 4 682 483 A1**
(43) Date of publication of application: **21.01.2026**
(21) Application number: 24306220.5
(22) Date of filing: 19.07.2024
(51) Int. Cl.: G01F 23/263

(54) **PERMITTIVITY SENSOR AND LEVEL SENSOR THEREWITH**

(71) Applicant: Soletanche Freyssinet, 92500 Rueil Malmaison (FR)
(72) Inventor: BASILE, Bernard, 78370 PLAISIR (FR)
(74) Representative: Plasseraud IP

(57) **Abstract**

Methods and sensors for detecting permittivity in an inner cavity (13) of a sleeve (10) with the aim of establishing the quality and quantity of filling material (6) within a sheath (2) of a cable for a bridge construction.

## Description

### TECHNICAL FIELD

The present invention relates to the technical field of civil engineering and in particular to a sensor enabling to measure a permittivity. The invention is aimed at, but not limited to, measuring level of filling operation when building a bridge element.

### BACKGROUND OF THE INVENTION

In the field of mechanical or civil engineering, it is sometimes appropriate to provide a tensioning cable in the form of a series of elongated elements housed in a sheath or a tube. The inner space between the elongated elements and the sheath or tube is generally filled with a filling material that holds the elongated elements in position and prevents their deterioration, e.g., by corrosion. In the event of a rupture of an elongated element, the filling material enables the elongated element to remain anchored in the sheath by friction on the filling material.

In a non-limiting example, the tensioning cables used in bridge construction may comprise a series of parallel or intertwined metallic (steel) strands or wires housed in a metallic or polyethylene sheath and the filling material may be cementitious grout.

It is of utmost importance to ensure that the filling material is poured appropriately and occupies any space left within the sheath by the strands or wires. A pocket of air in the filling material may be detrimental to the lifetime of the cable.

Various steps are performed **during the pouring operation** to ensure that no space is left empty by the filling material. For example, a chemical or rheological control of the filling material could precede the pouring operation. A comparison can be made between the volume of filling material that has actually been poured and the geometrically expected free volume in the sheath. The sheath may also be provided with vents such that one can observe the filling material overflowing at the vents exits and know that all the free space in the sheath has been filled. Compressing the filling material or generating a vacuum in the sheath prior to pouring the filling material are other known techniques.

None of these techniques enable to ascertain that the sheath is filled with filling material at some given locations of interest which could be prone to air pockets such as the top portion of a cable path. In particular, when the sheath is itself embedded in a concrete solid body, no access is possible to establish whether the sheath is filled with the filling material or not.

These limitations underscore the need for an improved approach for monitoring the pouring operation of filling material in a sheath for a mechanical or civil construction.

### SUMMARY OF THE INVENTION

The present disclosure provides for such a need, thanks to a permittivity sensor comprising: a sleeve defining a cylindrical coordinate system and comprising: an inner tube comprising an outer surface and defining an inner cavity; an outer tube comprising an inner surface; an annular air gap, radially delimited by the outer surface of the inner tube and the inner surface of the outer tube; and a plurality of electrodes arranged in the annular air gap at respective circumferential locations; and a control unit electrically connected to each electrode of the plurality of electrodes, the control unit being configured to: measure a signal between a first electrode and a second electrode of the plurality of electrodes, the second electrode being circumferentially adjacent to the first electrode; and convert the signal into a permittivity value.

This sensor enables to measure a permittivity within the inner cavity without compromising the protection of the electrodes and the reliability of the measures. The electrodes are indeed protected from the filling material (in the inner cavity) and from an external concrete block (solid body around the outer tube). Also, the air gap acts as a spacer between the electrodes and the solid body, making sure that the electromagnetic field of the electrodes is essentially directed to measure the inner cavity. Such a permittivity sensor can be interposed between two sections of the sheath that can receive the elongated elements. The elongated elements can also be housed in the inner cavity. As the filling material is poured, this permittivity sensor can detect, thanks to the electrodes, variations of permittivity in the inner cavity. Various physical parameters can be detected. For instance, the absence or presence of filling material can be detected, as well as the identification of the material, or the quality of filling material. By providing several electrodes at appropriate locations, the level of filling material can also be determined. This sensor enables to monitor the filling material during the pouring operation and therefore to rectify any defect that would be detected. For instance, if an insufficient amount of material is detected, more material can be injected into the sheath.

The (dielectric) permittivity is the ability for a material to store electrical energy in an electrical field. In the present disclosure, this property has helpful applications to detect the presence or absence, or the nature of a material crossed by an electromagnetic field.

In the present document, the sleeve defines a cylindrical coordinate system, i.e., an axial direction, a radial direction and a tangential or circumferential direction. The words "inner" and "outer" refer to a relative radial position with respect to a central axis of the sleeve.

The electrodes are made of an electrically conductive material (e.g., copper, aluminum, steel, etc.). The inner tube may be made of a low-permittivity material, such as a plastic material.

In some examples, the electrodes of the plurality of electrodes are distributed circumferentially over an angle comprised between 20° and 270°. This range of angles allow to provide sufficient information while not using an unnecessarily high number of electrodes. The plurality of electrodes comprises at least two electrodes. The plurality of electrodes may comprise at least one pair of electrodes, each pair having two adjacent electrodes. A given electrode may form a pair with an adjacent electrode on one side, and may form a second pair with another adjacent electrode, on another side.

In some examples, the outer surface of the inner tube has a first diameter in a central region of the inner tube and has a second diameter at two axial ends of the inner tube, the second diameter being greater than the first diameter, wherein the plurality of electrodes are arranged on the outer surface in the central region, and wherein the outer tube radially contacts the inner tube at the two axial ends thereof.

In some examples, each electrode of the plurality of electrodes has an axial length and a circumferential width, wherein the axial length is at least five times greater than the circumferential width. Providing elongated electrodes enables to average the signal over a long distance which may be relevant especially when the cable is inclined with respect to the vertical direction.

In some examples, the inner tube and the outer tube are straight. In a variant, the tubes are curved.

In some examples, the permittivity sensor comprises a pressure sensor arranged to measure a pressure in the inner cavity.

In some examples, the permittivity sensor comprises a temperature sensor arranged in the annular air gap and configured to measure a temperature in the air gap and/or in the inner cavity.

In some examples, each electrode has an axial length, a circumferential width, and a thickness, wherein the axial length of each electrode is comprised between 50 mm and 300 mm; and/or the circumferential width of each electrode is comprised between 5 mm and 20 mm; and/or a distance between two circumferentially adjacent electrodes is comprised between 5 mm and 20 mm; and/or the thickness is comprised between 0.01 mm and 0.5 mm.

In some examples, the inner tube and/or the outer tube has a radial thickness comprised between 2 mm and 10 mm. These dimensions guarantee a sufficient mechanical hold (or strength), while not interfering with the permittivity measurements.

In some examples, the signal images an electrical capacity between the first electrode and the second electrode. Indeed, two adjacent electrodes can be considered as forming a capacitor whose capacity depends on how an electric field between the two electrodes is disturbed. Hence, the value of the capacity enables to determine the permittivity of the material crossed by the field lines, thereby allowing to determine the amount, nature or parameters of filling material.

In some examples, the control unit is configured to analyze the signal in time domain reflectometry to provide an image of the permittivity between the first electrode and the second electrode. The electrodes may be considered as an equivalent electric conductor (the so-called "transmission line theory", see Microwave Engineering, Pozar, ISBN 978-1-118-21363-6). A pulse can be sent to one electrode and the response on the other electrode is measured to establish a time of flight of the pulse. From the time delay, a permittivity can be determined.

In some examples, the control unit is connected to each electrode of the plurality of electrodes through a multiplexer. This design enables to measure all the pairs of electrodes without requiring a high number of electric cables, which makes the overall design less cumbersome.

The present disclosure also relates to a level detector comprising a permittivity sensor according to any of the examples above, wherein the control unit is further configured to: measure a plurality of signals, by, for each electrode, measuring a signal between said electrode and an electrode circumferentially adjacent to said electrode; convert the plurality of signals into a plurality of permittivity values; and estimate a level of a filling material present in the inner cavity, based on the permittivity values and the circumferential locations of the first and second electrode. If the permittivity sensor is equipped with a single pair of electrodes, then it is possible to establish the presence or absence of filling material at the location of this single pair of electrodes. When the permittivity sensor is equipped with more than two electrodes, the presence/absence of filling material can be established at different circumferential locations, thereby making it possible to detect the location of the surface (the geometrical boundary between presence and absence of filling material) and hence the level of filling material.

The present disclosure also relates to a material detector comprising a permittivity sensor according to any of the examples above, wherein the control unit is further configured to identify which material is present in the inner cavity, based on the permittivity value. By comparing the measured permittivity to known values for various materials, it is possible to identify whether air, water, fresh concrete, steel rods/wires are present, based on their known permittivity. The number of materials to be identified is limited to the materials which can be present in the inner cavity. Also, when using several electrodes (as explained below), the location of the pairs of electrodes enables to detect which material is at which location.

The present disclosure also relates to a presence detector comprising a permittivity sensor according to any of the examples above, wherein the control unit is further configured to estimate the presence of a material in the inner cavity, based on the permittivity value and the circumferential locations of the first and second electrode.

The present disclosure also relates to a method for measuring a level of a filling material comprising: providing a level sensor as described above; pouring a filling material in the inner cavity of the level sensor and simultaneously: measuring a plurality of signals, by, for each electrode, continuously or sequentially measuring a signal between said electrode and an electrode circumferentially adjacent to said electrode; converting the plurality of signals into a plurality of permittivity values; and estimating the level of the filling material present in the inner cavity, based on the permittivity values and the circumferential locations of the electrodes.

The present disclosure also relates to a method for constructing a civil engineering structure comprising: providing a level sensor as described above; connecting a first axial end of the level sensor to a first sheath; connecting a second axial end of the level sensor to a second sheath; inserting a plurality of elongated elements through the first sheath, through the inner cavity of the level sensor and through the second sheath, whereby interstices are being defined between the elongated elements themselves, between the elongated elements and the inner tube of the level sensor, and between the elongated elements and the first and second sheaths; filling the interstices with a filling material, and simultaneously monitoring the level of filling material with the level sensor, by: measuring a plurality of signals, by, for each electrode, continuously or sequentially measuring a signal between said electrode and an electrode circumferentially adjacent to said electrode; converting the plurality of signals into a plurality of permittivity values; and estimating the level of the filling material present in the inner cavity, based on the permittivity values and the circumferential locations of the electrodes.

The present disclosure also relates to a civil engineering structure comprising: at least one permittivity sensor according to any of examples above; a plurality of elongated elements passing through the inner cavity of each of the at least one level sensor, interstices being defined between the elongated elements themselves, and between the elongated elements and the inner tube; a filling material, filling the interstices; and a solid body surrounding the outer tube. In such a structure, the quality or the degradation of the filling material can be monitored, allowing to decide when and if the structure needs to be serviced.

The present disclosure also relates to a method for monitoring the civil engineering structure as discussed above, the method comprising: sequentially measuring the permittivity with the control unit of the at least one permittivity sensor; and generating an indication to a user indicating to the user whether or not the permittivity is within an interval of expected values. This method enables to monitor the quality or the degradation of the filling material, allowing a user to be informed when and if the structure needs to be serviced.

### BRIEF DESCRIPTION OF THE DRAWINGS

Some benefits of the disclosure may become more apparent in view of the attached figures in which:
FIG. 1 shows a regular cable.
FIG. 2 depicts a sleeve.
FIG. 3 shows a permittivity sensor.
FIG. 4 shows a permittivity sensor interposed between two sections of sheath.
FIG. 5 shows a cross-section of FIG. 4 in section V:V.
FIG. 6 shows an inclined configuration.
FIG. 7 illustrates a diagram of a method for monitoring a level.
FIG. 8 shows a diagram of a method for constructing a structure.

### DETAILED DESCRIPTION OF THE INVENTION

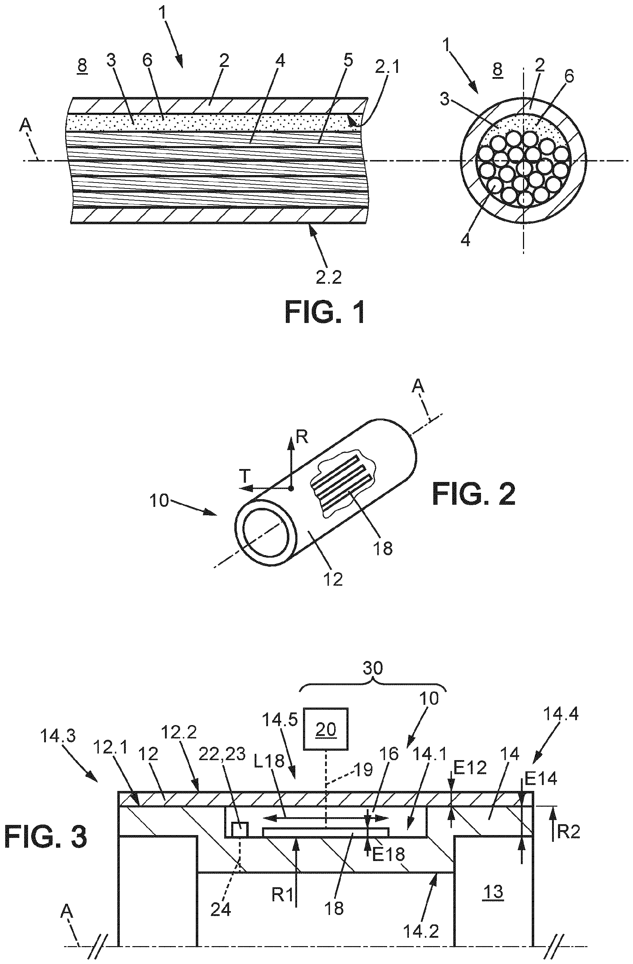

FIG. 1 shows a known cable 1, represented in a longitudinal cross-section and in a cross-section perpendicular to its longitudinal axis A. In the illustrated example, the cable 1 comprises a sheath 2 that is has a tubular shape of circular cross-section centered on axis A. The sheath 2 may be made of polyethylene or metal. The sheath 2 comprises an inner surface 2.1 delimiting an inner cavity 3.

A series of strands 4 are arranged in the inner cavity 3. Each of the strands 4 can contain several intertwined wires 5, for example seven wires. The number of strands 4 may be between 1 and 200, preferably between 5 and 30, more preferably the number of strands is 19. The room left in the inner cavity 3 after insertion of the strands 4 is filled with a filling material 6. The filling material may be cementitious material, wax, grease, resin, etc, injected into the sheath as a liquid (grout) or malleable form and which solidifies shortly after.

In the example shown, the sheath 2 has an external surface 2.2 which is in contact with a solid body 8 surrounding the sheath. The solid body 8 may be made of concrete. This illustrates the general principle of a cable which may be used in bridge construction.

As explained above, it is important to ensure that the filling material 6 occupies the entirety of the space of the inner cavity 3 left after insertion of the strands 4. The solid body 8 makes it difficult to access directly the sheath for monitoring the quality of filling.

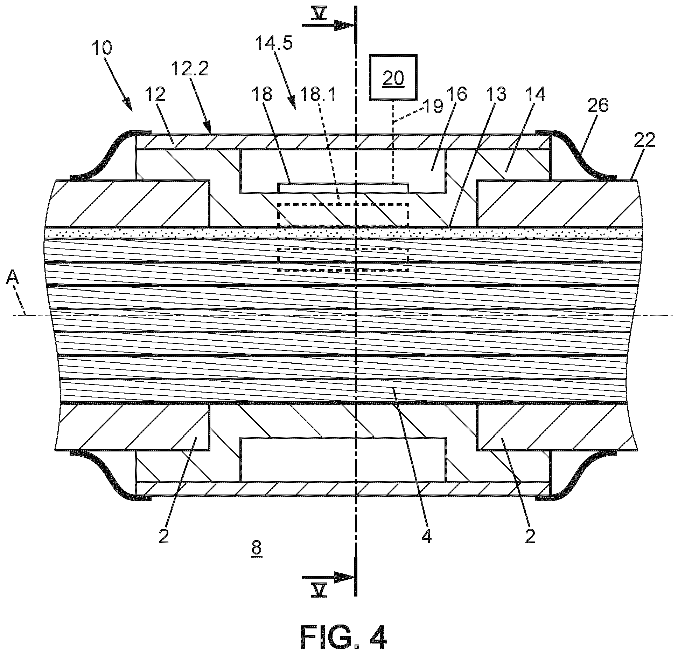

FIG. 2 shows an isometric view of a sleeve 10 that in the present disclosure is intended to be inserted between two sections of sheath (see FIG. 4). The sleeve 10 defines a cylindrical coordinate system A, R, T. The sleeve has an outer tube 12 which is here rendered partially transparent to let appear electrodes 18 as will be described further below.

FIG. 3 shows a permittivity sensor 30 comprising the sleeve 10 of FIG. 2 and a control unit 20. The sleeve 10 comprises an outer tube 12 and an inner tube 14. The outer tube 12 and the inner tube 14 may be straight or may be curved. For illustration purposes, the tubes 12, 14 are shown as straight.

The tubes 12, 14 are coaxially arranged, the outer tube 12 being arranged radially outwardly from the inner tube 14. The tubes may be made of plastic material, e.g. high-density polyethylene, or any similar low-permittivity material which can mechanically withstand the forces expected in the intended application and the forces resulting from the injection of a filling material in the sleeve 10. The tubes 12, 14 may be fixed together by any appropriate means, for example welding.

The outer tube 12 comprises an inner surface 12.1 and an outer surface 12.2. Both these surfaces 12.1, 12.2 may be substantially cylindrical. The radial thickness E12 of the outer tube 12 may be comprised between 2mm and 10mm. The outer diameter of the outer tube 12 may be comprised between 80mm and 200mm, preferably between 100 and 150mm, more preferably about 125mm.

The inner tube 14 comprises an outer surface 14.1 and an inner surface 14.2. The inner surface 14.2 delimits an inner cavity 13. The inner tube 14 may have two axial ends 14.3, 14.4. In a central region 14.5 of the inner tube 14, the outer surface 14.1 has a radius R1 which is smaller than the radius R2 of the outer surface 14.1 at the two axial ends 14.3, 14.4. For example, R2 may be comprised between 105% and 150% of R1. The radius R2 may be comprised between 35mm and 90mm, preferably between 55mm and 65mm, more preferably about 60mm. The radial thickness E14 of the inner tube 14 may be comprised between 2mm and 10mm. In particular, in the central region 14.5, the thickness of the inner tube 14 may be of less than 5mm, preferably about 3mm. The axial length of each axial end 14.3, 14.4 (having the radius R2) may be comprised between 10% and 30% of the total axial length of the inner tube 14.

At the axial ends 14.3, 14.4, the outer surface 14.1 of the inner tube 14 may contact the inner surface 12.1 of the outer tube 12.

In the central region 14.5, an air gap 16 is formed between the outer surface 14.1 of the inner tube 14 and the inner surface 12.1 of the outer tube 12.

In the air gap 16, preferably on the outer surface 14.1 of the inner tube 14, a series of electrodes 18 are arranged.

The electrodes 18 are connected to a control unit 20 by an appropriate connector or series of connectors 19 (schematically shown as a dashed line), for example an automated or manual multiplexer, enabling to connect the control unit simultaneously or sequentially to various combinations of electrodes. The connector(s) 19 may be welded, screwed or attached in any other reliable manner to each electrode 18. A notch (not shown) may be arranged in the inner tube 14 and/or in the outer tube 12 to accommodate the passage of the connector 19. Once the connector(s) 19 are positioned in the notch, the notch may be sealed with a resin to prevent any external material penetrating into the air gap 16 through the notch. The notch may be arranged at the lowest point of the inner tube.

In some examples, the control unit 20 may be incorporated into the air gap and there is no need to provide a passage for the connectors 19 through the inner or outer tube. The control unit 20 may then operate autonomously and may communicate wirelessly with an external user interface.

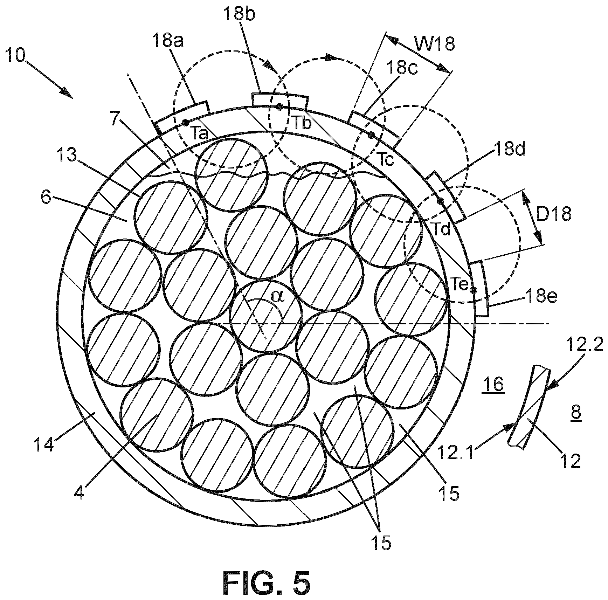

The electrodes 18 may be each shaped as a band. Other shapes may be appropriate. Each electrode 18 has an axial length L18 which may be comprised between 50mm and 300mm. Each electrode 18 has a width (W18 on FIG. 5) which may be comprised between 5mm and 20mm. The axial length L18 may be at least five times greater than the circumferential width W18 of each electrode 18.

Each electrode 18 has a thickness (E18) which may be comprised between 0.01mm and 5mm. The electrodes may be aligned axially, meaning that they share the same axial position and have the same length. In alternative designs, the electrodes may have different shapes or positions. The electrodes 18 may be spaced apart circumferentially of a distance (D18 on FIG. 5) which may be comprised between 80% and 120% of the width of the electrodes 18, preferably the distance D18 is equal to the width W18 of the electrodes 18. The distance between the electrodes and the width of the electrodes impacts the amount of power needed to obtain a signal from the electrodes.

The electrodes 18 are made of an electrically conductive material (e.g., copper, aluminum, steel, etc.).

The electrodes 18 may be fixed to the inner tube 14 by any appropriate means, e.g., adhesive, glue, screws, etc. The electrodes 18 may be arranged directly on the outer surface 14.1 of the inner tube 14. Alternatively, the electrodes 18 may be arranged in the vicinity of the outer surface 14.1 and may be held by any appropriate means (intermediate support) in the air gap 16. The electrodes 18 may be applied as a group on the outer surface 14.1: for instance, they may be firstly arranged on an adhesive sheet, and then the adhesive sheet is laid on the outer surface 14.1. The electrodes 18 may be embedded in a protective bag. The electrodes 18 may be protected by a resin, a varnish or any other appropriate protection. A desiccant bag can be positioned in the air gap 16 to delay any corrosion. This bag may in particular absorb any condensation which may result from the exothermic reaction as the concrete material solidifies around and/or inside the sleeve.

The number of electrodes 18 may be comprised between 2 and 20, preferably at least 4.

The purpose of the outer tube 12 is mainly to protect the electrodes 18 from the environment of the sleeve 10 and to ensure that no material interferes with the electric field of the electrode on a radially outer side of the electrodes.

The sleeve 10 may further comprise a pressure sensor 22 and/or a temperature sensor 23. These sensors 22, 23 may be arranged in the air gap and may provide pressure and temperature data in the air gap 16 and/or in the inner cavity 13, through an appropriately designed passage 24 between the air gap 16 and the inner cavity 13. The temperature sensor 23 may be used to compensate the effects of the temperature on the measurements of the electrodes. The pressure sensor may comprise a membrane and strain gauges arranged on the membrane to measure variations of deformation of the membrane when the pressure varies. It is particularly useful to control the pressure of the filling material which may be pressurized to ensure its penetration in the entire interstices of the cavity.

The inner tube 14 and/or the outer tube 12 may comprise a vent that allows to perform an additional check on the pouring operation of the filling material.

As will be explained further below in relation to a particular application where the sleeve 10 is interposed in two sections of a cable (which could be similar to the one of FIG. 1), the sleeve 10 and the control unit 20 may function as a permittivity sensor. The control unit 20 may measure a signal between a first one of the electrodes and a second one of the electrodes, adjacent the first electrode and convert the signal into a permittivity value.

FIG. 4 shows the permittivity sensor 30 of FIG.3 incorporated between two sheaths 2. The sheaths 2 may abut axially against the inner tube 14 at opposite ends thereof. The external diameter of the sheaths 2 may be equal to the internal diameter of the inner tube 14 at the axial ends of the inner tube 14. The inner diameter of the sheaths 2 may be equal to the inner diameter of the inner tube 14 in the central region 14.5.

Strands 4 may extend through the inner cavity 13 and through both sheaths. The sheaths may be coupled to the sleeve 10 before inserting the strands 4 through the sheaths 2 and sleeve 10.

To ensure that the inner cavity 13 and the air gap 16 are sealed away from the solid body 8, sealing rings 26 may be arranged at both ends of the sleeve 10. For example, the sealing rings 26 may be thermo-retractable.

FIG. 5 shows a cross-section of the arrangement of FIG. 4 along the line labelled as V:V on FIG. 4. In this example, the filling material 6 does not completely fill the inner cavity 13 and an air pocket 7 remains.

FIG. 5 shows some examples of interstices 15 between strands 4 and between a strand 4 and the inner tube 14. These labelled interstices are filled with filling material.

In this example, five electrodes 18a, 18b, 18c, 18d, 18e are drawn but the present disclosure is not limited to this particular arrangement. The width of the electrodes is noted W18. The distance between two circumferentially adjacent electrodes is noted D18. In some examples, D18=W18 and this value is comprised between 5mm and 20mm. Each electrode 18 is arranged at a known circumferential location. For example, Ta, Tb, Tc, Td and Te identify a central point of the respective electrodes.

The series of electrodes 18 span over an angle α that may be comprised between 20° and 270°.

Some electro-magnetic field lines between two adjacent electrodes are schematically shown with dashed lines. As can be seen on FIG. 5, the field lines cross the inner tube 14, the strands 4, the filling material 6, the air pocket 7 and the air in the air gap 16. The outer tube 12 is partially shown on FIG. 5 for clarity. One can see that the inner surface 12.1 is radially far enough from the electrodes 18 so as to not disturb significantly the electro-magnetic field. For instance, the inner tube 12 may be distanced from the electrodes 18 such that 95% of the field lines do not cross the outer tube 12.

The inner tube 14 is sufficiently thin (for instance less than 5mm, preferably 3mm) so that the field lines may appropriately be impacted by the presence/absence of material in the cavity 13. It is to be noted that the thickness of the inner tube 14 should be sufficient to withstand the inner pressure which may be around 6 bar when pouring and applying pressure to the (then liquid) filling material.

The various materials that are crossed by the field lines may be considered as capacitors: the inner tube 14 (seen twice for each field line), and potentially air pocket 7, strands 4, filling material 6.

When an electric current is fed to an electrode, two neighboring electrodes function as a capacitor, whose capacity depends on the materials crossed by the field lines. Since the radially outer field lines merely see air of the air gap (which permittivity is neglectable), the capacity between two neighboring electrodes forming a pair is representative of the permittivity of the materials in the inner tube 14 in the vicinity of the pair of electrodes.

The electric capacity of an empty inner tube 14 can be measured before incorporation of the sleeve 10 between two sheaths The electric capacity of a strand alone can be measured when the strands are inserted (one by one or several simultaneously) into the sleeve 10 and sheaths 2. The strands 4 may be tensioned before injecting the filling material. It is thus possible to obtain a reference measurement for each pair of electrodes, as the strands are alone in the inner cavity 13. Therefore, the present sensor enables to distinguish between a portion of the inner cavity 13 that is free of any material, a portion that is occupied by strands only, and a portion that is occupied by strands and by filling material.

An alternative current of a frequency of 30MHz or 60MHz may be used to determine the capacity of the pairs of electrodes. Other frequencies may be used.

Similar calibrations may be made to detect the presence or absence of water, the density of the filling material, the quality of the filling material.

Each pair of adjacent electrodes 18 (18a+18b, 18b+18c, 18c+18d, 18d+18e) may be measured independently from one another. It is thus possible, knowing their positions Ta... Te, to obtain a cartography of the content of the inner tube 14 at the central region 14.5. In particular, the two top electrodes 18a, 18b may be positioned at the highest elevation of the sleeve 10 and thereby provide an indication on the filling operation, i.e., whether the sheaths 2 are filled with the filling material 6 at the location of the cable where the sleeve 10 is arranged. Also, as shown on the drawing, the pair 18d+18e will be the first pair to detect a change as the filling material is injected into the sheath/inner tube.

For example, if during injection of the filling material, the pair 18d+18e detects the presence of filling material and the pair 18c+18d does not detect the presence of filling material, this means that the level of filling material is at about the location Td.

In the illustrated example, an air pocket is present at the top of the tube and can be seen by electrodes 18a, 18b and 18c.

The combination of the permittivity detected by the control unit and the known locations Ta... Te (for example in the cylindrical coordinate system) of the electrodes enables therefore to establish the level of filling material.

Hence, the control unit may be configured to determine a capacity between a pair of electrodes and thereby determine the permittivity of the material seen by the electrodes. Ultimately, the nature of the material, presence or absence, or level of filling material may be established.

It has to be noted that the dimensions of the electrodes and the distance therebetween impacts the amount of power needed to feed the electrodes and the size of the electromagnetic field. If the field is too small, it does not penetrate in the inner cavity and if the field is too big, it may require too much power and eventually be disturbed by the solid body 8.

Another way of reaching that aim is to consider the pair of electrodes as forming an electric line of physical fixed length but of apparent length that is proportional to the dielectric permittivity. This follows the so-called "transmission line theory" (Pozar, 2012).

One can analyze the signal at the electrodes in time domain reflectometry to provide an image of the permittivity between the electrodes of a pair. The frequential reflectometry is used, transformed by an inverse Fourier transform into the temporal reflectometry. The principle is like sending an electric impulse at one end of an electrode and measuring the time of flight for the impulse to bounce back. This time of flight depends on the permittivity of the materials seen by the electromagnetic field between the electrodes.

A cable can contain several sheath sections and several sleeves 10 along the cable trajectory, for example, from 2 to 6 sheaths. It is thus possible for an operator to control in real time the advancement of the injection process along the cable. The operator may then check that each of the sleeves indicates a desired filling level and the operator may react in real time, that is, before the filling material solidifies, to complement the injection operation if needed.

Each sleeve 10 contains at least one pair of electrodes. Depending on the position of the sleeve, it may be advantageous to provide more electrodes. For instance, in the location of highest altitude of the cable, more electrodes may be useful. One sleeve may be arranged at the lowest point of the cable to serve as a reference value of permittivity for the other sleeves.

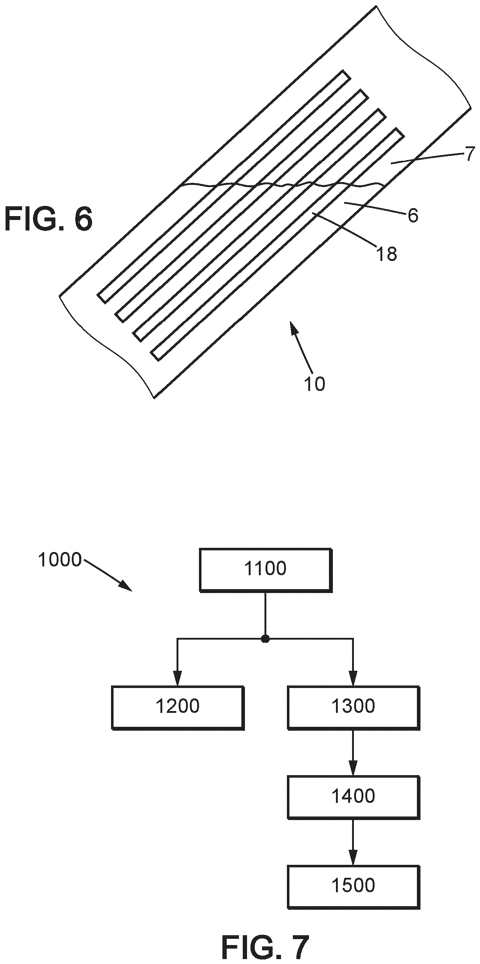

FIG. 6 shows schematically a configuration where the sleeve 10 is arranged along a cable between two sheaths (not shown) in an inclined configuration. This may be a location of high altitude of a cable used in a bridge structure. One can see that it is advantageous to provide elongated electrodes so that the dispersion between the unfilled and filled points is averaged by the response of the electrodes.

FIG. 7 illustrates a method 1000 for measuring a level of a filling material comprising: providing 1100 a level sensor, i.e. a permittivity sensor 30 as noted above where the control unit is configured to determine a level based on the knowledge of the permittivity given either by the pair arranged at the highest altitude of the sensor (18a, 18b on FIG. 5) or by multiple pairs of electrodes, and based on their location; pouring/injecting 1200, potentially under pressure, a filling material in the inner cavity of the level sensor and simultaneously: measuring 1300 a plurality of signals, by, for each electrode, continuously or sequentially measuring a signal between said electrode and an electrode circumferentially adjacent to said electrode; converting 1400 the plurality of signals into a plurality of permittivity values, by using for example one of the two methods discussed above (capacity or frequential reflectometry); and estimating 1500 the level of the filling material present in the inner cavity, based on the permittivity values and the circumferential locations of the electrodes.

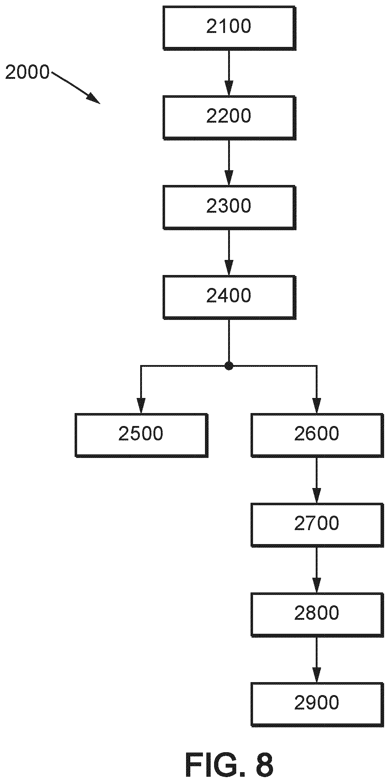

As discussed above in relation to FIG. 4, the installation process of the permittivity sensor may be included during the construction of a civil engineering structure. The method of construction 2000 is illustrated on FIG. 8 and it comprises: providing 2100 a permittivity sensor as discussed above; connecting 2200 a first axial end of the level sensor to a first sheath; connecting 2300 a second axial end of the level sensor to a second sheath; inserting 2400 a plurality of elongated elements through the first sheath, through the inner cavity of the level sensor and through the second sheath, whereby interstices are being defined between the elongated elements themselves, between the elongated elements and the inner tube of the level sensor, and between the elongated elements and the first and second sheaths; filling 2500 the interstices with a filling material, and simultaneously monitoring the level of filling material with the level sensor, by: measuring 2600 a plurality of signals, by, for each electrode, continuously or sequentially measuring 2700 a signal between said electrode and an electrode circumferentially adjacent to said electrode; converting 2800 the plurality of signals into a plurality of permittivity values; and estimating 2900 the level of the filling material present in the inner cavity, based on the permittivity values and the circumferential locations of the electrodes.

Finally, the present disclosure relates to a civil engineering structure, such as a bridge containing the cable mentioned above with at least one permittivity sensor 30; a plurality of elongated elements 4 passing through the inner cavity 13 of each of the at least one level sensor 30, interstices 15 being defined between the elongated elements themselves, and between the elongated elements 4 and the inner tube 14 ; a filling material 6, filling the interstices 15; and a solid body 8 surrounding the outer tube 12.

Thanks to the permittivity sensor 30, it is possible to monitor the civil engineering structure by sequentially measuring the permittivity with the control unit of the at least one permittivity sensor; and generating an indication to a user if the permittivity is within an interval of expected values .

The sensors described above remain incorporated in the civil engineering structure. It is therefore possible at any moment during the lifetime of the civil engineering structure, to monitor the permittivity and its variations. This could serve as establishing a relationship between the permittivity and a performance of the protection of the strands from corrosion, e.g., the pH number of the filling material.

Although the present disclosure has focused on bridge or civil engineering constructions, the person skilled in the art will understand that other fields of application may benefit from the innovative concepts lying therein.

## Claims

1. A permittivity sensor (30) comprising:
a sleeve (10) defining a cylindrical coordinate system (A, R, T) and comprising:
an inner tube (14) comprising an outer surface (14.1) and defining an inner cavity (13);
an outer tube (12) comprising an inner surface (12.1);
an annular air gap (16), radially delimited by the outer surface (14.1) of the inner tube (14) and the inner surface (12.1) of the outer tube (12); and
a plurality of electrodes (18) arranged in the annular air gap (16) at respective circumferential locations (Ta, Tb, Tc); and
a control unit (20) electrically connected to each electrode (18) of the plurality of electrodes (18), the control unit (20) being configured to:
measure a signal between a first electrode (18a) and a second electrode (18b) of the plurality of electrodes (18), the second electrode (18b) being circumferentially adjacent to the first electrode (18a); and
convert the signal into a permittivity value.

2. The permittivity sensor (30) according to claim 1, wherein the electrodes (18) of the plurality of electrodes (18) are distributed circumferentially over an angle (α) comprised between 20° and 270°.

3. The permittivity sensor (30) according to claim 1 or 2, wherein the outer surface (14.1) of the inner tube (14) has a first radius (R1) in a central region of the inner tube and has a second radius (R2) at two axial ends (14.3, 14.4) of the inner tube (14), the second radius (R2) being greater than the first radius (R1), wherein the plurality of electrodes (18) are arranged on the outer surface (14.1) in the central region (14.5), and wherein the outer tube (12) radially contacts the inner tube (14) at the two axial ends (14.3, 14.4) thereof.

4. The permittivity sensor (30) according to any of claims 1 to 3, wherein each electrode (18) of the plurality of electrodes (18) has an axial length (L18) and a circumferential width (W18), and wherein the axial length (L18) is at least five times greater than the circumferential width (W18).

5. The permittivity sensor (30) according to any of claims 1 to 4, wherein the inner tube (14) and the outer tube (12) are straight.

6. The permittivity sensor (30) according to any of claims 1 to 5, further comprising a pressure sensor (22) arranged to measure a pressure in the inner cavity (13).

7. The permittivity sensor (30) according to any of claims 1 to 6, further comprising a temperature sensor (23) arranged in the annular air gap (16) and configured to measure a temperature in the air gap (16) and/or in the inner cavity (13).

8. The permittivity sensor (30) according to any of claims 1 to 7, wherein each electrode (18) has an axial length (L18), a circumferential width (W18), and a thickness (E18), wherein the axial length (L18) of each electrode (18) is comprised between 50 mm and 300 mm; and/or the circumferential width (W18) of each electrode (18) is comprised between 5 mm and 20 mm; and/or a distance (D18) between two circumferentially adjacent electrodes (18) is comprised between 5 mm and 20 mm; and/or the thickness (E18) is comprised between 0.01 mm and 0.5mm.

9. The permittivity sensor (30) according to any of claims 1 to 8, wherein the inner tube (14) and/or the outer tube (12) has a radial thickness (E12, E14) comprised between 2 mm and 10 mm.

10. The permittivity sensor (30) according to any of claims 1 to 9, wherein the signal images an electrical capacity between the first electrode (18a) and the second electrode (18b).

11. The permittivity sensor (30) according to any of claims 1 to 9, wherein the control unit (20) is configured to analyze the signal in time domain reflectometry to provide an image of the permittivity between the first electrode (18a) and the second electrode (18b).

12. The permittivity sensor (30) according to any of claims 1 to 11, wherein the control unit (20) is connected to each electrode (18) of the plurality of electrodes through a multiplexer (19).

13. A level detector (30) comprising a permittivity sensor (30) according to any of claims 1 to 12, wherein the control unit (20) is further configured to:
measure a plurality of signals, by, for each electrode, measuring a signal between said electrode and an electrode circumferentially adjacent to said electrode;
convert the plurality of signals into a plurality of permittivity values; and
estimate a level of a filling material present in the inner cavity, based on the permittivity values and the circumferential locations of the first and second electrode.

14. A material detector (30) comprising a permittivity sensor according to any of claims 1 to 12, wherein the control unit is further configured to estimate which material is present in the inner cavity, based on the permittivity value.

15. A presence detector (30) comprising a permittivity sensor according to any of claims 1 to 12, wherein the control unit is further configured to estimate the presence of a material in the inner cavity, based on the permittivity value and the circumferential locations of the first and second electrode.

16. Method (1000) for measuring a level of a filling material comprising:
providing (1100) a level sensor (30) according to claim 13;
pouring (1200) a filling material (6) in the inner cavity (13) of the level sensor (30) and simultaneously:
measuring (1300) a plurality of signals, by, for each electrode (18), continuously or sequentially measuring a signal between said electrode (18a) and an electrode (18b) circumferentially adjacent to said electrode (18a);
converting the plurality of signals into a plurality of permittivity values; and
estimating the level of the filling material (6) present in the inner cavity (13), based on the permittivity values and the circumferential locations (Ta, Tb) of the electrodes (18a, 18b).

17. Method (2000) for constructing a civil engineering structure comprising:
providing (2100) a level sensor (30) according to claim 13;
connecting (2200) a first axial end (14.3) of the level sensor to a first sheath (2);
connecting (2300) a second axial end (14.4) of the level sensor to a second sheath (2);
inserting (2400) a plurality of elongated elements (4) through the first sheath (2), through the inner cavity (13) of the level sensor and through the second sheath (2), whereby interstices (15) are being defined between the elongated elements (4) themselves, between the elongated elements (4) and the inner tube (14) of the level sensor, and between the elongated elements (4) and the first and second sheaths (2);
filling (2500) the interstices (15) with a filling material (6), and simultaneously monitoring the level of filling material (6) with the level sensor, by:
measuring (2600) a plurality of signals, by, for each electrode (18), continuously or sequentially measuring (2700) a signal between said electrode and an electrode circumferentially adjacent to said electrode;
converting (2800) the plurality of signals into a plurality of permittivity values; and
estimating (2900) the level of the filling material present in the inner cavity (13), based on the permittivity values and the circumferential locations (Ta-Te) of the electrodes (18).

18. A civil engineering structure comprising:
at least one permittivity sensor according to any of claims 1 to 12;
a plurality of elongated elements (4) passing through the inner cavity (13) of each of the at least one level sensor (30), interstices (15) being defined between the elongated elements (4) themselves, and between the elongated elements (4) and the inner tube (14);
a filling material (6), filling the interstices (15); and
a solid body (8) surrounding the outer tube (12).

19. A method for monitoring the civil engineering structure according to claim 17, the method comprising:
sequentially measuring the permittivity with the control unit (20) of the at least one permittivity sensor (30); and
generating an indication to a user indicating to the user whether or not the permittivity is within an interval of expected values.
